# EUROPEAN PATENT APPLICATION

(11) **EP 0 911 217 A2**
(43) Date of publication of application: **28.04.1999**
(21) Application number: 98660098.9
(22) Date of filing: 28.09.1998
(51) Int. Cl.: B60Q 1/26, F21M 7/00, B60Q 1/32

(54) **Lamp**

(30) Priority: 17.10.1997 FI 973989
(71) Applicant: OY TALMU AB, 24100 Salo (FI)
(72) Inventor: Kuntze, Tomi, 20720 Turku (FI); Lehtinen, Kari, 24260 Salo (FI)
(74) Representative: Roitto, Klaus

(57) **Abstract**

The invention relates to a lamp comprising a body portion (1) and a cover (2) as well as a seal (7) between the body portion and the cover for sealing the cover against the body portion. In order that the service life of the lamp may be long and its operation safe, so that the lamp is tight against humidity also in such operating conditions, when exposed to an external load, such as to a load caused by washing with pressure water, and in order that the lamp may be easy to manufacture, the lamp is characterized in that,
between the seal (7) and the body portion (1), there is a chemical bond (8a, 8b, 8c) between the sealing material and the material of the body portion for keeping the seal tightly fastened to the body portion, which chemical bond is provided by casting the seal in a mould together with the body portion, the seal (7) comprises a first continuous sealing face (9) arranged to seal the cover against a first stop face (12),
the seal (7) comprises a second continuous sealing face (10) arranged to seal the cover against a second continuous stop face (13) being functionally apart from the first sealing face (9), and
the seal comprises a third continuous sealing face (10) arranged to seal the cover against a third stop face (14) and being functionally apart from the first sealing face and the second sealing face.

## Description

### BACKGROUND OF THE INVENTION

The invention relates to lamp comprising a body portion and a cover and a seal between the body portion and the cover for sealing the cover against the body portion. More specifically, the invention relates to a lamp according to the preambles of the attached claims 1 and 2.

Lamps comprising a body portion, a cover and a seal are rather common in different vehicles. A typical example of such lamps are side lights to be mounted at the sides of lorries, these lamps being luminous reflectors, i.e. reflector lamps. It has turned out that known lamps, including said reflectors, do not function properly as long as would be desirable. The greatest technical problem is that current feed to the bulb of the lamps becomes essentially weaker with the time or stops entirely. The reason for this is that humidity and water get into the body of the lamps, where the bulb of the lamp is situated. Humidity oxidizes conductors feeding current to the lamp and other current feed means, whereby their resistance increases essentially and the bulb does not get sufficient current. Propagation of corrosion is accelerated by the heat generation of the bulb of the lamp. When the lamp does not function according to the instructions any more due to corrosion, the whole lamp is exchanged for a new one. The lamps have to be exchanged at rather short intervals, which not only causes costs, but is also relatively laborious. A broken lamp reduces the safety, of course.

Known lamps, such as said side lights, comprise a seal for sealing the lamp cover against the body portion of the lamp. The seal is constituted by a sealing strip, which circles around the periphery of the body portion of the lamp and is mounted detachably, manually or by means of a robot, or the seal is cast or moulded in a separate process into a groove of the body portion or glued thereto. When the seal is constituted by a strip, the seal mounted in place has a joint, which may form a leakage.

A rather soft material, for instance EPDM rubber, having a hardness of about 50 on the Shore A scale, is used for sealing known lamps, because a soft seal is supposed to seal better than a hard seal. Such a seal functions rather well until the vehicle is washed with a high-pressure water jet. At high-pressure washing, the strong pressure of the water twists the body portion of the lamp and causes deformations in the soft sealing material to the extent that humidity may get into the lamp past the seal. Deformation takes place, even if the lamp body is made of a relatively hard plastic, such as talc-filled propene. Said problem is associated especially with lamps whose cover is made of a considerably harder material than the body portion of the lamp. A typical example of such lamps are luminous reflectors, the covers of which are usually manufactured of acrylic plastic, which is very hard. A jet of pressure water does not deform the hard cover, but certainly the body portion, such deformation easily causing slits, through which the water may flow past the seal, in spite of the seal.

Another problem with the known lamps is that mounting the seal in place makes the manufacture of the lamps slow.

From FR 2 715 898, a lamp housing is known, in which the seal is designed for the purpose of an easy mounting of the cover to the body. The seal is detachably mounted to the body, whereby a possibility exists that a leakage is formed between the seal and the body, if the mounting has been carried out carelessly.

DE 35 31 220 discloses a lamp, the cover of which is fastened to the body by glueing. The sealing comprises only one sealing face, which is laborious to provide.

### BRIEF DESCRIPTION OF THE INVENTION

The object of the present invention is to provide a novel lamp, by which said problems are avoided. To implement this, the lamp according to the invention is characterized in that,
between the seal and the body portion, there is a chemical bond between the sealing material and the material of the body portion for keeping the seal tightly fastened to the body portion, which chemical bond is provided by casting the seal in a mould together with the body portion, and that the seal further comprises a third sealing portion having a third continuous sealing face, arranged to seal the cover against a third continuous stop face and being functionally apart from the first sealing face and the second sealing face.

An analog embodiment of the invention is set forth in the attached claim 2.

Most preferably, the sealing portions of the seal form an integral structure, which makes them simple to manufacture.

Preferred embodiments of the invention are set forth in the attached claims 3 to 8.

An essential idea of the invention is to utilize a plastic moulding method known per se, a so-called 2-component method, for providing a lamp seal, and additionally, to seal the cover of the lamp to the body portion by at least two sealing faces situated apart from each other with respect to a sealing function, which means that if one sealing face possibly leaks, the other one is still tight and secures that the leak cannot propagate into the body portion of the lamp. By the use of the 2-component method, by casting the seal in a mould, the seal can be firmly, tightly and easily fastened to the body portion, or alternatively, to the cover, while the body portion or the cover, respectively, is moulded or extruded in said mould. In other words, the seal is provided during the same time cycle as the actual body portion (or cover) is moulded or extruded. Thanks to the fact that the 2-component method is used for the manufacture, a relatively hard material can be used as sealing material, because it deforms less than a soft sealing material, through which, in turn, the sealing capability of the seal is secured, when the seal is under pressure. Additionally, if three sealing faces are used, a secure tightness is achieved in all situations of use.

The greatest advantages of the lamp according to the invention are that its service life is long and its operation is safe, because it stands washing with pressure water and other external load, without water or humidity, causing corrosion, getting into the lamp. In addition, the lamp is easy and rapid to manufacture.

### BRIEF DESCRIPTION OF THE DRAWINGS

The invention will now be described in more detail by means of two embodiments with reference to an attached drawing, in which
Figure 1 shows a cross-section of a first embodiment of a lamp according to the invention, seen in the direction of line I - I in Figure 2,
Figure 2 shows a body portion of the lamp of Figure 1, seen in the direction of line II - II in Figure 1,
Figure 3 illustrates what kind of external forces the lamp can be subjected to, and
Figures 4 and 5 show cross-sections of a cover and a body portion, respectively, of a second embodiment of the lamp of the invention, seen in the angle of view of Figure 1.

### DETAILED DESCRIPTION OF THE INVENTION

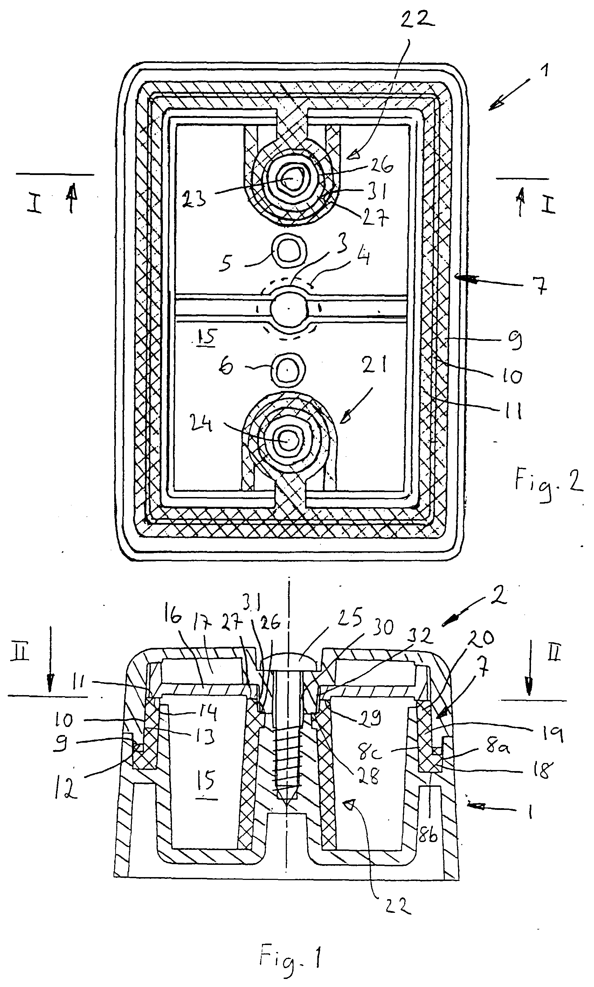

Figures 1 and 2 show a reflector lamp to be used in lorries, for instance. The lamp comprises a body portion 1 and a transparent cover 2, which has a reflecting surface and is usually called "glass". The body portion 1 comprises a holder 3 for a bulb 4 drawn by a broken line. Reference numerals 5 and 6 indicate holes for fastening the reflector lamp to a base (not shown).

A seal generally designated 7 is situated between the body portion 1 and the cover 2 and circles around the periphery of the body portion. The seal 7 and the body portion 1 are provided by casting in a mould by means of a so-called 2-component method. By the 2-component method, the seal 7 and the body portion 1 can be manufactured in one working step so that the final result is a seal made of a relatively soft material and chemically bonded to the body portion, which is made of a harder material than the seal. A mounting face between the seal 7 and the body portion 1 is designated 8a, 8b and 8c. The material of the seal 7 is a rubber-like material based on propene, for instance, and having a hardness of about 56 on the Shore A scale. The material may be typically e.g. TPE, i.e. thermoplastic elastomer, TPU, i.e. thermoplastic urethane, and TPR, i.e. thermoplastic rubber. The material of the body portion 1 is talc-filled propene.

Acrylic plastic, which is substantially harder than the material of the body portion 1, has generally been used as the material of the cover 2 of reflectors.The cover comprises a sealing background 16 of acrylic or ABS plastic, which is ultrasound-welded to the reflecting part of the cover in such a way that no humidity gets into a space 17 between the reflecting part and the sealing background. In the central area of the sealing background 16, there is an opening enabling the light of the bulb 4 to get through the reflecting surface.

The seal 7 comprises three sealing faces 9, 10 and 11 circling around the periphery of the body portion 1.The cover 2 comprises three corresponding stop faces 12, 13 and 14 circling around the periphery of the cover and forming together with the sealing faces 9, 10 and 11 three sealing faces functionally apart from each other, which prevent humidity from getting into an inner space 15 of the body portion 2, the space containing the bulb 4 and current feed means (not shown) of the bulb. The sealing faces 9, 10 and 11 are situated on different levels, which preferably form an angle with each other such that the level of the sealing face 10 is preferably mainly vertical with respect to the levels defined by the other sealing faces 9 and 11. Thanks to this, the sealing function of the sealing faces is very safe in all circumstances. A small square area indicated by reference numeral 50 refers to a part of the seal 7 being under a pressure. The pressure is caused by the lower edge of the cover pressing the seal 7, when the cover is fastened with a screw 25.

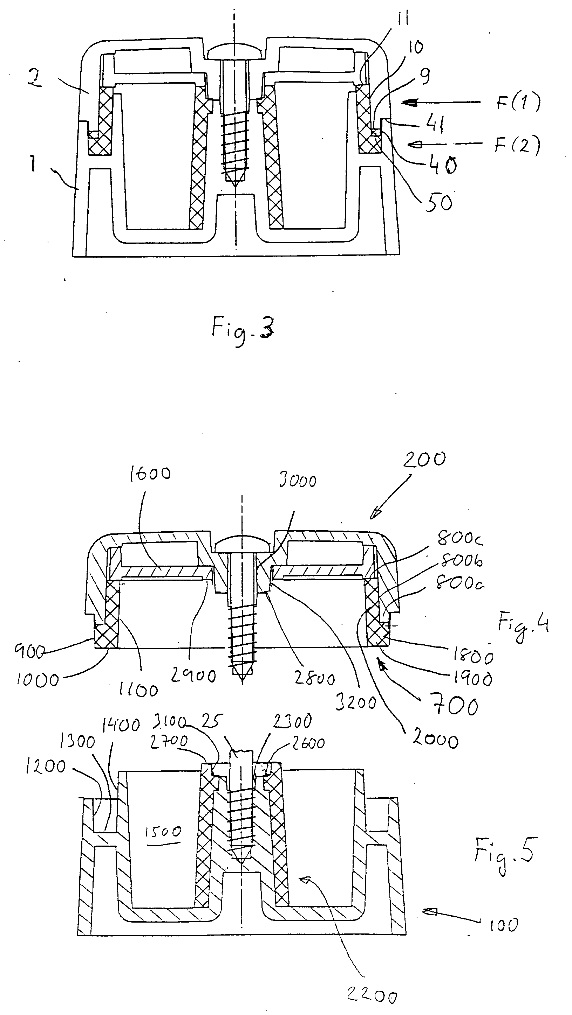

If the body portion 1 is exposed to an external, rather strong force, to a high-pressure water jet, for instance, the body portion is slightly twisted. Figure 3 illustrates forces F(1) and F(2) caused by the water jet. When the cover 2 is exposed to the force F(1), possible slits 40, 41, caused by manufacturing tolerances between the cover and the body 1, tend to open. No opening can occur, however, because, with the force F(1) pressing the cover 2, the vertical sealing face 10 seals even better than before, while the cover moves inwards against the sealing face 10. The sealing face 11 acts as a security for the sealing. With the force F(2) pressing the body 1, the possible slits 40, 41 between the cover 2 and the body are closed and the sealing face 9 stops the water from moving into the lamp. The sealing faces 10 and 11 act as a security for the sealing. Accordingly, the sealing face 11 secures that a safe sealing of a very long duration is provided in all situations of use.

Consequently, the seal 7 to be moulded in one piece can be said to have three portions: a sealing portion 18, a sealing portion 19 and a sealing portion 20, which have corresponding sealing faces 9, 10 and 11.

Reference numerals 21 and 22 indicate mounting turrets having holes 23, 24 for screws 25, by means of which the cover 2 can be fastened to the body portion 2 such that the seal 7 remains slightly pressed between the cover and the body portion. The pressure contributes to the sealing between the cover 2 and the body portion 1, naturally. The mounting turrets 21, 22 comprise two functionally separate sealing areas 26 and 27 constituted by the seal 7, the cover 2 comprising corresponding stop faces 28 and 29. The sealing areas 26, 27 secure that no humidity can get into the inner space 15 through a hole 30 for the screw in the cover. It is also conceivable that the area of the seal 7 designated 31 is arranged to be sealed against the area of the cover indicated by the reference numeral 32, in order to achieve a "triple" sealing. However, this is not necessary, not even for securing the sealing, if the mounting turrets 21, 22 are made rigid enough.

As appears from the figure, the sealing areas 26, 27 covering the mounting turrets 21, 22 have been made integral with the seal 7.

Figures 4 and 5 show a solution analogous with that of the Figures 1 and 2, in which solution a seal 700 is not moulded integral with the body portion, as in the Figures 1 and 2, but with the cover 200. The idea, manufacture and operation of the solution correspond essentially to the solution of the Figures 1 and 2. However, one difference is that the seal of a mounting turret 2200 is not integral with the seal of the cover 200, which makes the solution more complicated than the solution of the Figures 1 and 2. On account of the above, the solution of the Figures 4 and 5 is obvious to one skilled in the art, without any further explanations, and therefore, the following list contains the significance of the reference numerals used in the Figures 4 and 5 only:
- 800a =: mounting face between seal 700 and cover 200
- 800b =: mounting face between seal 700 and cover 200
- 800c =: mounting face between seal 700 and cover 200
- 900 =: first sealing face of seal 700, circling around cover 200
- 1000 =: second sealing face of seal 700, circling around cover 200
- 1100 =: third sealing face of seal, circling around cover 200
- 1200 =: stop face of body portion 100 against sealing face 900
- 1300 =: stop face of body portion 100 against sealing face 1000
- 1400 =: stop face of body portion 100 against sealing face 1100
- 1500 =: inner space of body portion 100
- 1600 =: support of cover 200
- 1700 =: space between reflecting part and support 1600 of cover 200
- 1800 =: sealing portion of seal 700
- 1900 =: sealing portion of seal 700
- 2000 =: sealing portion of seal 700
- 2300 =: hole in mounting turret 2200 for screw 25
- 25 =: screw
- 2600 =: sealing area of seal of mounting turret 2000
- 2700 =: sealing area of seal of mounting turret 2000
- 2800 =: stop face of cover 200 against sealing area 2600
- 2900 =: stop face of cover 200 against sealing area 2700
- 3000 =: hole in cover 200 for screw 25
- 3100 =: seal area of mounting turret 2000
- 3200 =: seal area of mounting turret 2000

The invention has been described above by means of two embodiments, and therefore, it is pointed out that details of the invention can be implemented in many ways within the scope of the attached claims. Consequently, the first, second and third sealing portion with their sealing faces, set forth in the claim, need not correspond to the sealing portions and sealing faces of the figures, as regards reference numerals. In accordance with this, the "first sealing face" mentioned in the claims is not necessarily the sealing face indicated by 11 in the Figures 1 and 2, but it may be the sealing face 12 marked in the Figures 1 and 2, and the third sealing face mentioned in the claims may be any of the sealing faces 11 to 13 of the Figures 1 and 2. The design and material of the seal 7, 700 may differ from what is presented above; the materials of the body portion and the cover may differ from what has been presented. The lamp does not need to comprise a reflecting part.

## Claims

1. A lamp comprising a body portion (1) and a cover (2) and a seal (7) between the body portion and the cover for sealing the cover against the body portion, which seal is made of a material whose properties differ from the material of the body portion and which seal comprises a first sealing portion (18) having a first continuous sealing face (9) arranged to seal the cover against a first continuous stop face (12), and which seal comprises a second sealing portion (19) having a second continuous sealing face (10) arranged to seal the cover against a second continuous stop face (13) and being functionally apart from the first continuous sealing face (9), **characterized** in that, between the seal (7) and the body portion (1), there is a chemical bond (8a, 8b, 8c) between the sealing material and the material of the body portion for keeping the seal tightly fastened to the body portion, which chemical bond is provided by casting the seal in a mould together with the body portion, and that the seal (7) further comprises a third sealing portion (20) having a third continuous sealing face (11) arranged to seal the cover against a third continuous stop face (14) and being functionally apart from the first sealing face (9) and the second sealing face (10).

2. A lamp comprising a body portion (100) and a cover (200) and a seal (700) between the body portion and the cover for sealing the cover against the body portion, which seal is made of a material whose properties differ from the material of the cover and which seal comprises a first sealing portion (1800) having a first continuous sealing face (900) arranged to seal the body portion against a first continuous stop face (1200), and which seal comprises a second sealing portion (1900) having a second continuous sealing face (1000) arranged to seal the body portion against a second continuous stop face (1300) and being functionally apart from the first continuous sealing face (900), **characterized** in that, between the seal (700) and the cover (200), there is a chemical bond (800a, 800b, 800c) between the sealing material and the material of the body portion for keeping the seal tightly fastened to the cover, which chemical bond is provided by casting the seal in a mould together with the cover, and that the seal (700) further comprises a third sealing portion (2000) having a third continuous sealing face (1100) arranged to seal the body against a third continuous stop face (1400) and being functionally apart from the first sealing face (900) and the second sealing face (1000).

3. A lamp according to claim 1 or 2, **characterized** in that the first, second and third sealing portion (18 and 19; 1800 and1900) are integral.

4. A lamp according to claim 1, **characterized** in that the first sealing face (9) is situated on a level different from the level of the second sealing face (10).

5. A lamp according to claim 1 or 2, **characterized** in that the first, second and third sealing face (9, 10 and 11; 900, 1000 and 1100) are situated on different levels in such a way that one (10; 1000) of said sealing faces (9, 10, 11; 900, 1000, 1100) is mainly vertical with respect to the other sealing faces.

6. A lamp according to any preceding claim, **characterized** in that the seal (7; 700) is made of a rubber-like material and that the body portion (1; 100) and the cover (2; 200) are made of a harder material than the seal.

7. A lamp according to claim 6, **characterized** in that the cover (2; 200) is formed to a reflector and made of a harder material than the body portion (1; 100).

8. A lamp according to claim 1, its body portion (1) comprising holes (23, 24) for fastening the cover (2) to the body portion by fastening means (25), **characterized** in that the seal (7) surrounds the holes (23, 24) in such a way that the seal is arranged to seal the cover against a stop face (28, 29) along at least two continuous sealing areas (26 and 27), which are functionally apart from each other.
